# EUROPEAN PATENT APPLICATION

(11) **EP 4 789 782 A1**
(43) Date of publication of application: **12.08.2026**
(21) Application number: 24888293.8
(22) Date of filing: 04.07.2024
(51) Int. Cl.: B07C 5/342, B07C 5/16, G06T 7/00

(54) **SCRAP TRANSPORT DEVICE, SCRAP TRANSPORT METHOD, PROGRAM, AND RECORDING MEDIUM**

(30) Priority: 06.11.2023 JP 2023189309
(71) Applicant: JFE Steel Corporation, Tokyo 100-0011 (JP)
(72) Inventor: NAGAYA, Hiroki, Tokyo 100-0011 (JP); ISHIGAKI, Yusuke, Tokyo 100-0011 (JP); NISHINA, Yoshiaki, Tokyo 100-0011 (JP)
(74) Representative: Hoffmann Eitle
(86) International application number: PCT/JP2024/024317
(87) International publication number: WO 2025/099991

(57) **Abstract**

Provided is a technology that enables scrap to be sorted, extracted, and transported to another location. A scrap transport device for selecting and transporting a scrap pile (1) containing a plurality of pieces of scrap (2) includes: an imaging device (3) configured to capture an image of the scrap pile (1); an image analysis unit (4) configured to estimate scrap information including sorting information for identifying the position of each detected scrap and characteristics of scrap (2) constituting the each detected scrap by analyzing the captured image taken by the imaging device (3), the each detected scrap being a collection of one or more pieces of scrap (2) present in each of one or more regions in the scrap pile (1); a selection computing unit (5) configured to select detected scrap that satisfies a predetermined selection condition by referring to the estimated sorting information; and a transfer device (6) configured to extract and transport scrap (2) from a region where the detected scrap selected by the selection computing unit (5) is present.

## Description

### Technical Field

The present invention relates to a technology for transporting scrap selected from a plurality of pieces of scrap.

### Background Art

In the related art, there is a technology for partially extracting scrap from a plurality of pieces of scrap and transporting the scrap. PTL 1 and PTL 2 disclose technologies as such a technology, for example.

Note that, in the present specification, the term "extract" is also referred to as the term "pick up."

In PTL 1, iron-based scrap is picked up and transported by a lifting magnet. PTL 1 states that the component of the lifted scrap is analyzed by a component analyzer incorporated in the lifting magnet.

PTL 2 states that a portion of piled iron scrap is lifted and transported by a lifting device. In PTL 2, an image of a collection of iron scrap containing multiple grades of iron scrap classified by size is captured. PTL 2 also states that the captured image is subjected to image analysis, so that the proportion of each grade contained in the collection of iron scrap in the captured image is estimated.

### Citation List

### Patent Literatures

PTL 1: JP 2022-166489 A
PTL 2: JP 2020-95709 A

### Summary of Invention

### Technical Problem

For example, in steel works, an electric furnace is an example of a destination to which iron-based scrap picked up from a plurality of pieces of iron-based scrap is transported. Here, a target composition for scrap to be charged into the electric furnace is determined in advance. Accordingly, it is necessary to adjust the composition and amount of scrap and discharge the scrap to the electric furnace to achieve the target component.

However, in PTL 1, composition analysis is performed on scrap that is picked up. However, the composition analysis is performed after the pick-up. Accordingly, it is difficult to selectively extract and transport scrap based on the composition of the scrap from a plurality of pieces of scrap. That is, it is difficult to selectively discharge scrap based on the composition of the scrap. Accordingly, in a case where the technology of PTL 1 is applied to the discharge of scrap to an electric furnace, such a problem occurs that the accuracy of scrap to be discharged to the electric furnace might decrease by just that much.

In PTL 2, the proportion of each grade in the whole collection is estimated from the captured image of the collection of iron scrap that is piled or picked up. However, it is difficult to select and transport only scrap that satisfies the condition from the collection of iron scrap in the captured image. Accordingly, in a case where the technology of PTL 2 is applied to the discharge of scrap to the electric furnace, such a problem occurs that it is difficult to selectively discharge scrap based on the composition of the scrap.

The present invention is accomplished in view of the above problems. An object of the present invention is to provide a technology that enables target scrap to be sorted, extracted, and transported to another location.

### Solution to Problem

In order to achieve the above object, one aspect of the present invention is a scrap transport device for selecting and transporting scrap from a scrap pile containing a plurality of pieces of scrap. The scrap transport device includes: an imaging device configured to capture an image of the scrap pile; an image analysis unit configured to estimate scrap information including sorting information for identifying characteristics of scrap constituting each detected scrap by analyzing the captured image taken by the imaging device, the each detected scrap being a collection of one or more pieces of scrap present in each of one or more regions in the scrap pile; a selection computing unit configured to select detected scrap that satisfies a predetermined selection condition by referring to the estimated sorting information; and a transfer device configured to extract and transport scrap from a region where the detected scrap selected by the selection computing unit is present.

Here, the detected scrap may be constituted by one piece of scrap or may be constituted by a collection of a plurality of pieces of scrap.

### Advantageous Effects of Invention

In the aspect of the present invention, sorting information of each detected scrap constituting the scrap pile is acquired before scrap to be transported is extracted. Consequently, the scrap to be transported can be selected based on the sorting information, and the selected scrap can be transported.

Accordingly, with the aspect of the present invention, only the scrap that mainly satisfies the selection condition can be extracted and transported without analyzing the composition of the scrap after the scrap is picked up.

Here, the aspect of the present invention includes a case where the selection condition is satisfied by a combination of a plurality of pieces of detected scrap.

With the aspect of the present invention, in a case where discharging scrap to the electric furnace is assumed, for example, a target composition is set as the selection condition, so that scrap having the target composition or a composition close thereto can be selectively transported, for example.

### Brief Description of Drawings

FIG. 1 is a view illustrating an exemplary configuration of a scrap transport device according to an embodiment based on the present invention;
FIG. 2 is a view illustrating an exemplary setting of regions;
FIG. 3 is a view illustrating an exemplary processing flow of a scrap transport method;
FIGS. 4A to 4C are views to describe an example of transport of scrap, FIG. 4A illustrates scrap A and scrap B as scrap selected for transport, FIG. 4B illustrates the scrap A being transported by a transfer actuator, FIG. 4C illustrates the scrap A and the scrap B being transported together;
FIGS. 5A to 5D are views each to describe an example of repetition of transport of scrap;
FIG. 6 is a view illustrating an example of successive lifting of scrap;
FIGS. 7A and 7B are views each illustrating an example in which scrap is lifted successively;
FIG. 8 is a view illustrating an example of adjusting the lifting amount of scrap; and
FIG. 9 is a view illustrating an example of a program and a medium storing the program.

### Description of Embodiments

Next will be described embodiments of the present invention with reference to the drawings.

A scrap transport device and a transport method according to the present embodiment handle a plurality of pieces of scrap 2 placed in a placement area such as a yard floor or a truck bed, as objects to be transported. The present embodiment describes a transport device and a transport method configured to pick up scrap 2 selected from a scrap pile 1 containing the plurality of pieces of scrap 2. The scrap 2 thus picked up is transported to another place different from the placement area.

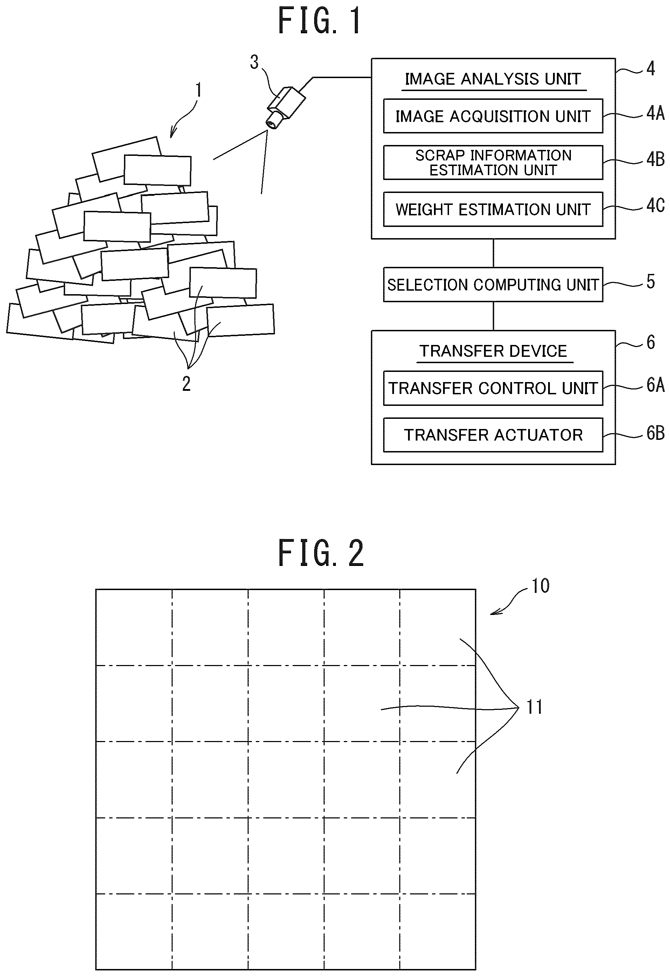

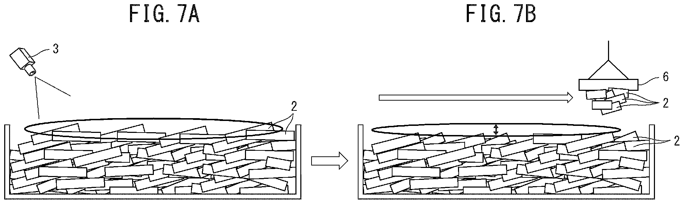

The scrap pile 1 is formed from an aggregation of multiple pieces of scrap 2 placed on the placement area. The scrap pile 1 is generally in a state where pieces of scrap 2 are piled up. The scrap pile 1 is, for example, placed in a piled-up manner (see FIG. 1). The scrap pile 1 is, for example, placed with its top surface being flat (see FIGS. 7A and 7B).

The material, shape, or the like of the scrap 2 as a transport target in the present invention is not limited in particular. The present invention is a technology suitable for metal scrap. The present invention can be particularly preferably used for sorting scrap 2 to be charged into a furnace (an electric furnace, a converter, and the like) in steel works, for example.

The present embodiment deals with iron-based scrap as the scrap 2, as an example.

The scrap transport device according to the present embodiment includes an imaging device 3, an image analysis unit 4, a selection computing unit 5, and a transfer device 6, as illustrated in FIG. 1.

### <Imaging device 3>

The imaging device 3 is a device configured to capture an image of the scrap pile 1 placed on the placement area. The scrap pile 1 as an imaging target is generally piled up (see FIG. 1). Note that objects other than the scrap 2, e.g., a background object around the scrap pile 1, may appear in the captured image taken by the imaging device 3. The imaging device 3 may be configured to capture an image of a collection of some pieces of scrap 2 in the scrap pile 1.

Note that, in this example, a collection of pieces of scrap 2, captured by the imaging device 3, is also referred to as the scrap pile 1.

The imaging device 3 is a camera, for example. The camera captures an image of the scrap pile 1 from above. Note that the imaging device 3 may be constituted by one or more cameras.

### <Image analysis unit 4>

Here, in the present specification, a collection of one or more pieces of scrap 2 present in each of one or more regions in the scrap pile 1 is defined as detected scrap. The regions may be set continuously or may be set discretely. The regions may be arranged fixedly or dynamically relative to an image. In a case where one piece of detected scrap is constituted by one piece of scrap 2, the position (contour) of each scrap 2 in the image is dynamically determined as a region, for example. In a case where one piece of detected scrap is constituted by a plurality of pieces of scrap 2, regions are determined first, for example. For example, as illustrated in FIG. 2, an image region 10 is partitioned into a plurality of regions 11, and scrap 2 present in each of the partitioned regions 11 is referred to as detected scrap in a target region 11.

The image analysis unit 4 includes an image acquisition unit 4A and a scrap information estimation unit 4B as illustrated in FIG. 1.

### [Image acquisition unit 4a]

The image acquisition unit 4A acquires a captured image of the scrap pile 1, taken by the imaging device 3. The image acquisition unit 4A transmits an imaging command to the imaging device 3 and acquires the captured image taken by the imaging device 3 in response to the imaging command, for example.

### [Scrap information estimation unit 4b]

The scrap information estimation unit 4B performs a process of analyzing the captured image taken by the imaging device 3 and estimating scrap information including sorting information for identifying the position of each detected scrap and the characteristics of scrap 2 constituting the detected scrap.

The sorting information is information for identifying scrap 2 to be picked up (extracted) from the scrap pile 1. The sorting information is determined based on a pick-up condition.

The following description describes a case where scrap 2 to be charged into a furnace such as an electric furnace is selected.

In this case, the composition of the scrap 2 to be charged into the furnace becomes important. Accordingly, the following description deals with a case where the sorting information is composition estimation information that enables estimation of the composition of the detected scrap as an example. In this case, a selection condition (described later) is target composition information.

The composition estimation information may indicate the composition of the scrap 2 itself or may be information that enables estimation of the composition. Examples of the information that enables estimation of the composition include, for example, the type of the scrap 2 and the grade of the scrap 2.

The type of the scrap 2 is information indicative of the origin of the scrap 2. The type of the scrap 2 is a category of the scrap 2, such as wire material or automotive panel material. The type of the scrap is classification information that enables identification of its material.

The grade is classification information that is set according to the material and size of the scrap 2.

The image analysis unit 4 of the present embodiment also includes a weight estimation unit 4C. The weight estimation unit 4C may not be provided.

The weight estimation unit 4C finds estimated-weight information of the detected scrap as the scrap information.

The scrap information may also include estimation information for estimating the melting property of the detected scrap.

The melting property of the scrap 2 is an index indicating the degree to which the scrap 2 melts under the same heating conditions. In a case where the scrap 2 is discharged to the electric furnace or the like, the melting property of the scrap 2 inside the furnace is an important factor in furnace operation. Note that the melting property is affected by the size or shape of the scrap 2. The melting property may be used as part of the sorting information.

As the estimation of the sorting information of each detected scrap from the captured image, machine learning is performed using multiple pieces of training data to generate a learning model in advance, for example. The training data includes, for example, an image capturing one or more pieces of scrap 2, together with sorting information of the one or more pieces of scrap 2 appearing in the image. The generated learning model uses, for example, a captured image as input data and outputs sorting information of detected scrap in each region of the captured image as output data. Note that the regions may be statically arranged or dynamically arranged, as described above. The scrap information estimation unit 4B inputs a captured image into the learning model and acquires sorting information of each detected scrap.

Note that the scrap information includes positional information and enables identification of the position of scrap 2 to be selected.

Estimation information for estimating the weight of the detected scrap and estimation information for estimating the melting property of the detected scrap may be estimated using a learning model or the like, for example, similarly to the acquisition of the sorting information.

### <Selection computing unit 5>

The selection computing unit 5 refers to the sorting information of each detected scrap, found in the image analysis unit 4. Then, the selection computing unit 5 performs a process of selecting detected scrap that satisfies a predetermined selection condition.

Here, the predetermined selection condition is information for selecting scrap 2 from among pieces of scrap 2 that are placed and captured by the imaging device 3.

In the present embodiment, it is assumed that scrap 2 to be charged into the electric furnace is to be sorted. Accordingly, target composition information for the scrap 2 to be charged into the electric furnace is used as selection information. The selection information should be appropriately determined in accordance with a purpose of the use of scrap 2 to be extracted from the scrap pile 1 and transported.

The selection computing unit 5 in the present embodiment compares the composition estimation information (the sorting information) of each detected scrap with the target composition information (the selection condition). Then, detected scrap in the scrap pile 1 is selected to achieve a target composition, based on the comparison. Note that the detected scrap thus selected is referred to as selected scrap.

The selection computing unit 5 in the present embodiment selects, for example, detected scrap whose composition is the same as or approximate to the target composition. In a case where the combination of pieces of detected scrap in a plurality of regions achieves the target composition, for example, the selection computing unit 5 in the present embodiment selects detected scrap as follows. That is, the pieces of detected scrap in the plurality of regions are treated as the selected scrap. Note that, in a case where the combination of a plurality of pieces of selected scrap achieves the target composition, for example, the following process is performed. That is, information forming one set with the plurality of pieces of selected scrap is added to the scrap information or the like.

Here, in a case where the composition estimation information does not represent composition information itself, a process of changing the information to the composition information, for example, is also performed. The case where the composition estimation information does not represent composition information itself indicates a case where the composition estimation information represents a type (such as the category of scrap 2, or the like), a grade, or the like. The process of changing is performed, for example, by preparing and referring to a database storing conversion information between types and compositions.

In a case where the selected scrap is directly discharged to the electric furnace, its discharge (input) amount is also important. In this case, a target weight may also be used as the selection condition, in addition to the target composition information.

In a case where the target weight is added as the selection condition, the selection computing unit 5 performs a sorting process of sorting the selected scrap so that the estimated weight of the selected scrap reaches the target weight.

In a case where the target weight is added as the selection condition, estimation information for estimating the weight of detected scrap should be used as the scrap information.

### <Transfer device 6>

The transfer device 6 is a device configured to extract the scrap 2 from a region where the selected scrap determined by the selection computing unit 5 is present and to transport the scrap 2. The position of the selected scrap should be found by referring to positional information included in the scrap information.

The transfer device 6 in the present embodiment includes a transfer control unit 6A and a transfer actuator 6B, as illustrated in FIG. 1.

### [Transfer actuator 6b]

The transfer actuator 6B is an actuator configured to extract and transport the scrap 2 from the scrap pile 1 that is placed. The transfer actuator 6B should be a driving device that can selectively pick up the scrap 2. Examples of the transfer actuator 6B include a standalone robot arm, a combination of a robot arm, a conveyor belt, and the like, and a crane device, for example. However, it is preferable that the transfer actuator 6B be capable of lifting and transporting the scrap 2 to a predetermined place. Examples of such a transfer actuator 6B include a lifting magnet, a grapple, and a shovel.

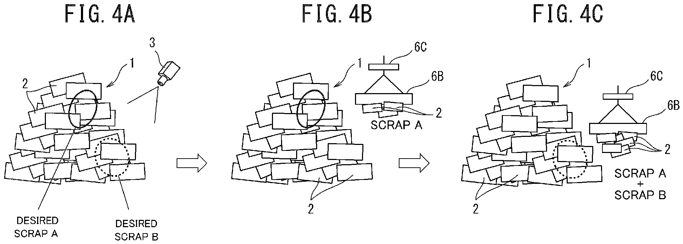

The transfer actuator 6B may be provided with a weight measurement device 6C configured to measure the weight of the scrap 2 to be transferred (see FIG. 4B).

### [Transfer control unit 6a]

The transfer control unit 6A acquires positional information of the selected scrap determined by the selection computing unit 5. The transfer control unit 6A performs control to drive the transfer actuator 6B to extract and transport the scrap 2 from a region where the selected scrap is present.

In a case where the transfer actuator 6B is provided with the weight measurement device 6C, the transfer amount of the scrap 2 should be adjusted based on the weight of the scrap 2 to be transferred.

### [Example of transfer process]

The following example deals with a case where a lifting magnet is used as the transfer actuator 6B.

The lifting force of the lifting magnet for the scrap 2 is adjustable. Examples of a method for adjusting the lifting force include a method for adjusting the magnetic lifting force of the lifting magnet, a method for adjusting the magnetic range, a method for adjusting the distance between the lifting magnet and the scrap 2, a method for adjusting the contact area between the lifting magnet and the scrap 2, and the like.

In a case where the distance is adjusted, the distance between the lifting magnet and the scrap 2 is measured based on a measurement result from a sensor group such as a range-finding sensor or a captured image from a camera. The distance can be adjusted based on the measurement information.

The lifting magnet is brought into contact with the scrap 2 once with no magnetic force, and the lifting magnet is lifted based on that state. Hereby, the distance between the lifting magnet and the scrap 2 can be adjusted.

In the present embodiment, the weight measurement device 6C is attached to the lifting magnet, as illustrated in FIG. 4B. The weight measurement device 6C is a load cell or the like, for example, and can measure an actual weight of the scrap 2 lifted by the lifting magnet.

### (Operation and others)

As an example of the transport method for transporting the scrap 2 using the scrap transport device described above, the following describes a case where the method is applied to a method for discharging the scrap 2.

The following example represents a case where the scrap 2 having the target composition is automatically collected using the scrap transport device at the time when the scrap 2 is charged into a furnace (an electric furnace, a converter, or the like). The scrap 2 in the scrap pile 1 includes various categories (types) and grades. Because of this, each scrap 2 has a different composition. In order to manufacture iron with an appropriate composition in the furnace, it is necessary to charge the furnace with the scrap 2 having appropriate types and weights.

In this example, composition estimation information of the scrap 2 is used as the sorting information, and target composition information is used as the selection condition.

### <Processing flow>

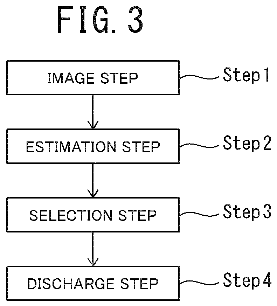

The main flow of the discharging method includes Steps 1 to 4 as illustrated in FIG. 3.

### <Step 1 (Imaging step)>

In Step 1, an image of the scrap pile 1 is captured by the imaging device 3.

In Step 1, an image of the whole scrap pile 1 may be captured by the imaging device 3, and the scrap pile 1 may be partitioned into a plurality of regions (see FIG. 2), and an image of each of the regions may be captured.

### <Step 2 (Estimation step)>

A collection of one or more pieces of scrap 2 present in each of one or more regions in the scrap pile 1 is defined as detected scrap.

In Step 2, the captured image is analyzed, and scrap information including composition estimation information (sorting information) for identifying the position of each detected scrap and the characteristics of scrap 2 constituting the detected scrap is estimated.

In Step 2, the composition estimation information of the scrap 2 in the scrap pile 1 is acquired using a learning model. Estimated-weight information of the scrap 2 is also acquired in addition to the composition estimation information of the scrap 2.

Here, it is preferable that the composition estimation information (and the estimated-weight information) of the scrap 2 be estimated for each region after dividing the scrap pile 1 into a plurality of regions. For example, in a case where an image of the whole scrap pile 1 is captured in Step 1, the composition estimation information (and the estimated-weight information) of the scrap 2 should be estimated for each region after dividing the image into a plurality of regions. In a case where an image of each of the plurality of regions of the scrap pile 1 is captured in Step 1, the composition estimation information (and the estimated-weight information) of the scrap 2 should be estimated for each captured image.

The plurality of regions may be partitioned in a grid manner, for example, as illustrated in FIG. 2.

### <Step 3 (Selection step)>

In Step 3, with reference to the estimated composition estimation information (the sorting information) of the scrap 2, detected scrap that satisfies the target composition information (the predetermined selection condition) is selected from the scrap pile 1.

In Step 3, regions are selected based on the composition estimation information of the scrap 2, estimated for each region, so that the target composition is satisfied. More specifically, the ratios of components (target components) desired for furnace operation are input into the selection computing unit 5 as input values. Then, which scrap 2 (scrap 2 in which region) in the captured scrap pile 1 should be charged into the furnace is calculated (see scrap A and scrap B in FIG. 4A). At this time, target weights of the target components are also input into the selection computing unit 5 as input values as well as the target components, and scrap 2 in the scrap pile 1 is selected so that the target components reach the target weights.

### <Step 4 (Discharge step)>

In Step 4, the detected scrap thus selected is fully or partially extracted and discharged (transported). In Step 4, the scrap 2 in the region selected in Step 3 is lifted and transported by the lifting magnet.

At this time, it is preferable to lift only scrap 2 in a range (a region subjected to the composition estimation) appearing in the captured image by adjusting the lifting force (the magnetic force or the like) of the lifting magnet. That is, it is preferable to lift only scrap 2 on the surface of the scrap pile 1, appearing in the captured image.

Further, in a case where a plurality of regions are selected in Step 3, corresponding pieces of scrap 2 in the plurality of regions are lifted and transported, individually. For example, in a case where the plurality of selected regions is away from each other, scrap 2 (the scrap A) in one region is lifted by the lifting magnet once, as illustrated in FIG. 4B. After that, the lifting magnet is moved to the other region, and scrap 2 (the scrap B) in the other region is lifted, as illustrated in FIG. 4C.

Note that there is a possibility that the state of the scrap pile 1 changes (the pile collapses) at the time when the scrap 2 in the one region is lifted by the lifting magnet and moved to the other region.

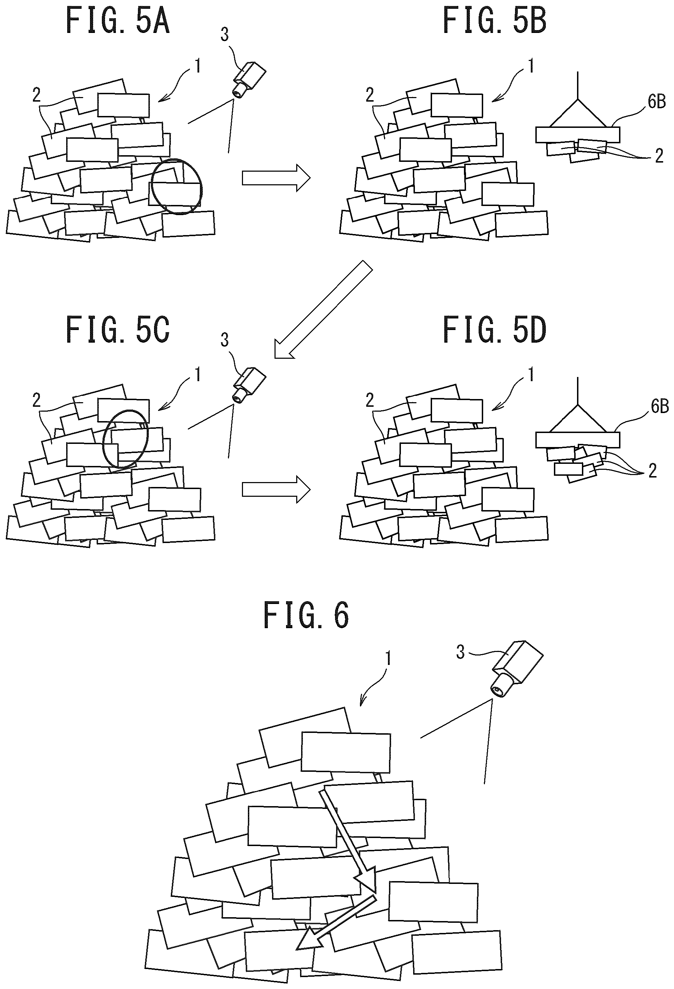

In order to deal with such a case, as illustrated in FIG. 5C, Steps 1 to 3 may be performed again to acquire composition estimation information of the scrap 2 in the other region.

In the meantime, in a case where the plurality of selected regions is close to each other, pieces of scrap 2 in the plurality of regions can be lifted successively while the lifting magnet is lowered and moved between the regions in the scrap pile 1, as illustrated in FIGS. 6, 7A, and 7B.

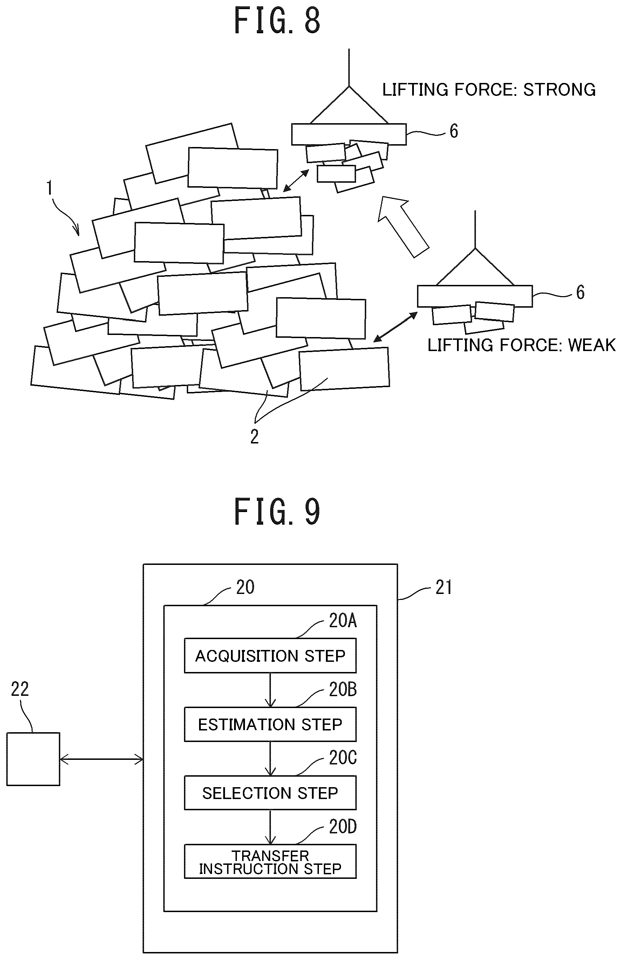

In this case, as illustrated in FIG. 8, the lifting magnet is moved to gradually approach the scrap 2, for example. Alternatively, the magnetic force of the lifting magnet is gradually increased. Hereby, pieces of scrap 2 in the plurality of regions can be lifted successively.

In Step 4, the weight of the scrap 2 lifted by the lifting magnet is measured by the weight measurement device 6C attached to the lifting magnet. The scrap 2 may be lifted only by the estimated weight (a target weight) acquired by the weight estimation unit 4C in each region. More specifically, actual measured-weight information of the scrap 2 lifted by the lifting magnet is compared with the estimated weight (the target weight). In a case where the actual measured weight is smaller than the estimated weight (the target weight) as a result of the comparison, there is a possibility that not all of the scrap 2 in a region subjected to composition estimation has been lifted. In this case, additional control may be performed, such as additionally lifting the scrap 2 in that region. In the meantime, in a case where the actual measured weight is larger than the target weight, there is a possibility that scrap 2 in a region other than the region subjected to composition estimation has also been lifted. In this case, control may be performed to drop part of the lifted scrap 2 by weakening the lifting force (magnetic force) of the lifting magnet. Alternatively, control may be performed to drop all of the scrap 2 once and then lift it again.

### (Program 20)

The process of selecting scrap 2 from the scrap pile 1 and instructing transport of the selected scrap 2 may be configured as a program 20 to be executed by a computer as illustrated in FIG. 9. The program 20 may be stored in a recording medium 21 in a computer-readable form.

The program 20 in the present embodiment includes an acquisition step 20A, an estimation step 20B, a selection step 20C, and a transfer instruction step 20D as illustrated in FIG. 9.

The acquisition step 20A is to perform a process of acquiring a captured image of the scrap pile 1 containing a plurality of pieces of scrap 2.

A collection of one or more pieces of scrap 2 present in each of one or more regions in the scrap pile 1 is defined as detected scrap.

The estimation step 20B is to perform a process of estimating scrap information including sorting information for identifying the position of each detected scrap and the characteristics of scrap 2 constituting the detected scrap by an image analysis process of analyzing the captured image thus acquired.

The selection step 20C is to perform a process of selecting detected scrap that satisfies a predetermined selection condition by referring to the estimated sorting information.

The transfer instruction step 20D is to perform a process of transmitting a command to extract and transport the selected detected scrap to the transfer device 6 to cause the transfer device 6 to extract and transport the selected detected scrap.

The program 20 is stored in a storage unit 21 (the recording medium 21) constituting a recording medium such as a hard disk and is called by a CPU 22 of the computer and executed.

### (Effects and others)

In the present embodiment, sorting information of each detected scrap forming the scrap pile 1 is acquired before scrap 2 to be transported is extracted. Then, the scrap 2 to be transported is selected based on the sorting information, and the selected scrap 2 is transported.

Accordingly, with the present embodiment, only the scrap 2 that mainly satisfies the selection condition can be extracted and transported without analyzing the composition of the scrap 2 after the scrap 2 is picked up.

Further, in the present embodiment, in a case where discharging scrap to the electric furnace is assumed, for example, a target composition is set as the selection condition, scrap 2 having the target composition or a composition close thereto can be selectively transported, for example.

### (Others)

This disclosure can also take the following configurations.
(1) Disclosure 1 is a scrap transport device for selecting and transporting scrap from a scrap pile containing a plurality of pieces of scrap. The scrap transport device includes: an imaging device configured to capture an image of the scrap pile; an image analysis unit configured to estimate scrap information including sorting information for identifying characteristics of scrap constituting each detected scrap by analyzing the captured image taken by the imaging device, the each detected scrap being a collection of one or more pieces of scrap present in each of one or more regions in the scrap pile; a selection computing unit configured to select detected scrap that satisfies a predetermined selection condition by referring to the estimated sorting information; and a transfer device configured to extract and transport scrap from a region where the detected scrap selected by the selection computing unit is present.
(2) In Disclosure 2, the sorting information may be composition estimation information that enables estimation of a composition of the scrap, and the selection conditions may include target composition information.
(3) In Disclosure 3, the composition estimation information may include at least one piece of information selected from information on a composition of the detected scrap, a type of the scrap constituting the detected scrap, and a grade of the scrap constituting the detected scrap.
(4) In Disclosure 4, the selection computing unit may select one or more pieces of detected scrap based on the composition estimation information of each detected scrap to achieve a target composition specified by the target composition information or to approach the target composition.
(5) In Disclosure 5, the image analysis unit may include a weight estimation unit configured to estimate information on a weight of the detected scrap separately from the sorting information, as part of the scrap information, and the selection condition may include a target weight.
(6) In Disclosure 6, the transfer device may be configured to extract target scrap from the plurality of pieces of scrap by lifting the target scrap.
(7) In Disclosure 7, the scrap transfer device may further include a weight measurement device configured to measure a weight of lifted scrap or a weight of each scrap pile, and the transfer device may adjust lifting force to lift scrap based on a measurement value from the weight measurement device such that the weight of scrap to be transferred reaches a target weight.
(8) In Disclosure 8, the scrap to be transported by the transfer device may be scrap to be charged into an electric furnace.
(9) In Disclosure 9, the sorting information may include information on a melting property of the scrap.
(10) Disclosure 10 is a scrap transport method for selecting and transporting scrap from a scrap pile containing a plurality of pieces of scrap. The scrap transport method includes: capturing an image of the scrap pile; estimating scrap information including sorting information for identifying characteristics of scrap constituting detected scrap by analyzing the captured image, the detected scrap being a collection of one or more pieces of scrap present in each of one or more regions in the scrap pile; selecting detected scrap that satisfies a predetermined selection condition by referring to the estimated sorting information; and extracting and transporting all or part of the detected scrap thus selected.
(11) Disclosure 11 is a program causing a computer to execute the following steps: an acquiring step for acquiring a captured image of a scrap pile including a plurality of pieces of scrap; an estimating step for estimating scrap information including sorting information for identifying characteristics of scrap constituting detected scrap by performing an image analysis process on the captured image thus acquired, the detected scrap being a collection of one or more pieces of scrap present in each of one or more regions in the scrap pile; and a selecting step for selecting detected scrap that satisfies a predetermined selection condition by referring to the estimated sorting information.
(12) Disclosure 12 is a computer-readable recording medium storing the program of this disclosure.

Here, Japanese Patent Application No. 2023-189309 (filed on November 6, 2023) to which the present application claims priority is incorporated herein by reference in its entirety. Herein, the present invention has been described referring to a limited number of embodiments, but the scope of the present invention is not limited to them, and it is obvious for a person skilled in the art that the embodiments are modifiable based on the disclosure.

### Reference Signs List

1: scrap pile
2: scrap
3: imaging device
4: image analysis unit
4A: image acquisition unit
4B: scrap information estimation unit
4C: weight estimation unit
5: selection computing unit
6: transfer device
6A: transfer control unit
6B: transfer actuator
6C: weight measurement device
20: program
20A: acquisition step
20B: estimation step
20C: selection step
20D: transfer instruction step
21: recording medium (storage unit)

## Claims

1. A scrap transport device for selecting and transporting scrap from a scrap pile containing a plurality of pieces of scrap, the scrap transport device comprising:
an imaging device configured to capture an image of the scrap pile;
an image analysis unit configured to estimate scrap information including sorting information for identifying characteristics of scrap constituting each detected scrap by analyzing the captured image taken by the imaging device, the each detected scrap being a collection of one or more pieces of scrap present in each of one or more regions in the scrap pile;
a selection computing unit configured to select detected scrap that satisfies a predetermined selection condition by referring to the estimated sorting information; and
a transfer device configured to extract and transport scrap from a region where the detected scrap selected by the selection computing unit is present.

2. The scrap transport device according to claim 1, wherein
the sorting information is composition estimation information that enables estimation of a composition of the scrap, and
the selection condition is target composition information.

3. The scrap transport device according to claim 2, wherein
the composition estimation information includes at least one piece of information selected from information on a composition of the detected scrap, a type of the scrap constituting the detected scrap, and a grade of the scrap constituting the detected scrap.

4. The scrap transport device according to claim 2 or 3, wherein
the selection computing unit selects one or more pieces of detected scrap based on the composition estimation information of each detected scrap to achieve a target composition specified by the target composition information or to approach the target composition.

5. The scrap transport device according to any one of claims 1 to 4, wherein
the image analysis unit includes a weight estimation unit configured to estimate information on a weight of the detected scrap separately from the sorting information, as part of the scrap information, and
the selection condition includes a target weight.

6. The scrap transport device according to any one of claims 1 to 5, wherein
the transfer device is configured to extract target scrap from the plurality of pieces of scrap by lifting the target scrap.

7. The scrap transport device according to any one of claims 1 to 6, further comprising:
a weight measurement device configured to measure a weight of lifted scrap or a weight of each scrap pile, and
the transfer device adjusts lifting force to lift scrap based on a measurement value from the weight measurement device such that the weight of scrap to be transferred reaches a target weight.

8. The scrap transport device according to claim 2, wherein
the scrap to be transported by the transfer device is scrap to be charged into an electric furnace.

9. The scrap transport device according to claim 8, wherein
the sorting information includes information on a melting property of the scrap.

10. A scrap transport method for selecting and transporting scrap from a scrap pile containing a plurality of pieces of scrap, the scrap transport method comprising:
capturing an image of the scrap pile;
estimating scrap information including sorting information for identifying characteristics of scrap constituting detected scrap by analyzing the captured image, the detected scrap being a collection of one or more pieces of scrap present in each of one or more regions in the scrap pile;
selecting detected scrap that satisfies a predetermined selection condition by referring to the estimated sorting information; and
extracting and transporting all or part of the detected scrap thus selected.

11. A program causing a computer to execute the following steps:
an acquiring step for acquiring a captured image of a scrap pile including a plurality of pieces of scrap;
an estimating step for estimating scrap information including sorting information for identifying characteristics of scrap constituting detected scrap by performing an image analysis process on the captured image thus acquired, the detected scrap being a collection of one or more pieces of scrap present in each of one or more regions in the scrap pile; and
a selecting step for selecting detected scrap that satisfies a predetermined selection condition by referring to the estimated sorting information.

12. A computer-readable recording medium storing the program according to claim 11.
